# EUROPÄISCHE PATENTSCHRIFT

(11) **EP 1 528 656 B1**
(45) Veröffentlichungstag und Bekanntmachung des Hinweises auf die Patenterteilung: **27.12.2006**
(21) Anmeldenummer: 03024938.7
(22) Anmeldetag: 29.10.2003
(51) Int. Cl.: H02K 5/14, H02K 13/00

(54) **Bürstenträger für einen elektromotorischen Stellantrieb und elektromotorischer Stellantrieb**
Brush holder for an electromotive actuator and elektromotive actuator
Porte-balais pour un mécanisme de commande à moteur électrique et mécanisme de commande à moteur électrique

(43) Veröffentlichungstag der Anmeldung: 04.05.2005
(73) Patentinhaber: SIEMENS AKTIENGESELLSCHAFT, 80333 München (DE)
(72) Erfinder: Benkert, Matthias, 97074 Würzburg (DE); Fiedler, Rudolf, 97980 Bad Mergentheim (DE)

(56) Entgegenhaltungen:
- EP-A- 0 474 904
- EP-A- 0 625 818
- DE-A- 4 241 405
- US-A- 5 015 897
- PATENT ABSTRACTS OF JAPAN vol. 017, no. 680 (E-1476), 14. Dezember 1993 (1993-12-14) -& JP 05 227698 A (ZEXEL CORP;OTHERS: 01), 3. September 1993 (1993-09-03)

## Beschreibung

Die Erfindung betrifft einen Bürstenträger für einen elektromotorischen Stellantrieb und einen elektromotorischen Stellantrieb. Bekannte elektromotorische Stellantriebe haben ein Gehäuse, in dem ein Motor und eine Trägerplatte angeordnet sind. Die Trägerplatte ist fest mit einem Bürstenträgerteil verbunden, das Bürsten aufweist, die einen Kommutator des Motors kontaktieren.

Derartige Stellantriebe werden beispielsweise in Kraftfahrzeugen als Antriebe für ein Schiebedach, einen Fensterheber, einen Sitzversteller oder einen Gurtstraffer eingesetzt. Solche Stellantriebe sind aufgrund des häufig nur geringen zur Verfügung stehenden Bauraums möglichst kompakt auszubilden und sollen kostengünstig herstellbar sein. Kostengünstig können derartige Stellantriebe hergestellt werden, wenn möglichst viele Teile, wie ein Elektronikgehäuse, das die Steuerelektronik für den Motor aufnimmt, oder auch maßgebliche Teile des Bürstenhalters aus Kunststoffmaterial, vorzugsweise thermoplastischem gespritztem Kunststoffmaterial hergestellt sind. Kunststoffteile übertragen jedoch Schwingungen sehr gut. Dies kann dann dazu führen, dass der elektromotorische Stellantrieb im Betrieb stark vibriert oder auch laute Geräusche abgibt. Dies ist jedoch aus Komfortgründen häufig unerwünscht, so z.B. bei einem Einsatz in einem Kraftfahrzeug.

Aus der DE 198 05 185 Al ist ein elektromotorischer Stellantrieb bekannt für ein Schiebedach eines Kraftfahrzeugs. Der Stellantrieb weist einen Elektromotor auf, der über ein Übersetzungsgetriebe verfügt, das aus einer Schneckenwelle und einem Schneckenrad besteht. Der Elektromotor ist in einem topfförmig ausgebildeten Polgehäuse angeordnet, das an einem Getriebegehäuse angeflanscht ist. Das Getriebegehäuse nimmt eine Leiterplatte auf, die starr mit einem Bürstenhalter verbunden ist. Der Bürstenhalter ist zur radialen AufsteckMontage bezogen auf die Antriebswelle des Elektromotors vorgesehen. Der Bürstenhalter ist in Kunststoffspritzgusstechnik hergestellt.

Aus der US5015897 ist ein Bürstenträger bekannt, der ein erstes ringförmiges Bürstenträgerteil aufweist, das starr mit einem Lagerschild verbunden ist. Das erste Bürstenträgerteil weist in Richtung der Rotorachse weisende Haltestege auf, mit denen ein zweites Bürstenträgerteil getragen ist. Das zweite Bürstenträgerteil ist als ringförmige Platte ausgebildet und weist eine zentrale Öffnung auf, durch die ein auf einer Rotorwelle sitzender Kommutator geführt ist. Der Kommutator ist mit Kontaktbürsten kontaktiert, die auf dem zweiten Bürstenträger um die Öffnung herum angeordnet sind. Zur Halterung des zweiten Bürstenträgerteils greifen die Enden der Haltestege in korrespondierende Halteöffnungen in dem zweiten Bürstenträgerteil ein, wobei in den Halteöffnungen jeweils Gummihülsen befestigt sind, die die Enden der Haltestege aufnehmen. Dadurch sind die beiden Bürstenträgerteile voneinander schwingungsentkoppelt.

Die Aufgabe der Erfindung ist es, einen Bürstenträger zu schaffen, der einfach ist und einen leisen und vibrationsarmen Betrieb eines elektromotorischen Stellantriebs ermöglicht. Gemäß eines weiteren Aspekts der Erfindung ist die Aufgabe, einen elektromotorischen Stellantrieb mit einem Bürstenträger zu schaffen, der einfach aufgebaut ist und einen leisen und vibrationsarmen Betrieb gewährleistet.

Die Aufgabe wird gelöst durch die Merkmale der unabhängigen Patentansprüche. Ausgestaltungen der Erfindung sind in den Unteransprüchen gekennzeichnet.

Bezüglich des Bürstenträgers für einen elektromotorischen Stellantrieb zeichnet sich die Erfindung aus durch ein erstes Bürstenträgerteil, das von einer Trägerplatte, beispielsweise einer elektrischen Leiterplatte, getragen wird und dazu mit dieser starr verbunden ist, und ein zweites Bürstenträgerteil, das Bürsten aufweist, mittels derer ein Kommutator des elektromotorischen Stellantriebs kontaktierbar ist. Dabei ist das zweite Bürstenträgerteil von dem ersten Bürstenträgerteil getragen und mittels mindestens eines Dämpfungselements schwingungsentkoppelt von dem ersten Bürstenträgerteil. Durch die Schwingungsentkopplung des ersten Bürstenträgerteils von dem zweiten Bürstenträgerteil ist auf einfache Weise gewährleistet, dass Schwingungen, die durch das Schleifen der Bürsten über die Kommutatorlamellen bei laufendem Stellantrieb entstehen, stark gedämpft werden. Andererseits ist das erste Bürstenträgerteil im eingebauten Zustand in dem elektromotorischen Stellantrieb fest mit der Trägerplatte verbunden, so dass auch eine zuverlässige elektrische Kontaktierung mit der Trägerplatte auf einfache Weise, zum Beispiel durch eine Lötverbindung, gewährleistet werden kann.

Dadurch dass das zweite Bürstenträgerteil eine U-förmige Aussparung zur Aufnahme des Kommutators des elektromotorischen Antriebs aufweist, kann der Bürstenträger in radialer Richtung zu dem auf einer Antriebswelle befestigten Kommutator in den Stellantrieb eingeführt werden. Dies ermöglicht eine sehr kompakte Ausbildung des elektromotorischen Stellantriebs, eine einfache Ausbildung des Motorgehäuses und eine vereinfachte Montage des Bürstenträgers bei der Herstellung des Stellantriebes.

Durch eine ringförmige Ausbildung des mindestens einen Dämpfungselementes und durch die Anordnung von mindestens einem zugeordneten Fixierstift auf dem ersten und/oder zweiten Bürstenträgerteil, auf den das Dämpfungselement aufgesteckt wird, ist das Dämpfungselement einfach durch den Fixierstift in seiner vorgegebenen Position gehalten und auch die Montage der beiden Bürstenträgerteile miteinander ist somit einfach durchführbar.

In einer weiteren vorteilhaften Ausgestaltung des Bürstenträgers sind in dem ersten und zweiten Bürstenträgerteil Führungen für Montagenadeln so ausgebildet, dass die Montagenadeln im eingeführten Zustand das erste und zweite Bürstenträgerteil zumindest bezogen auf einen Freiheitsgrad starr miteinander koppeln und gleichzeitig die beiden Bürsten in einer vorgegebenen Montageposition zurückhalten.

Dadurch ist auf einfache Weise ein sicherer Transport des Bürstenträgers und seine zuverlässige positionsgenaue Montage in dem elektromotorischen Stellantrieb ermöglicht. Nach dem Einsetzen des Bürstenträgers in den elektromotorischen Stellantrieb werden vor der Erstinbetriebnahme die Montagenadeln durch dazu bestimmte Öffnungen im Motorgehäuse herausgezogen. Dadurch wird die Schwingungsentkopplung des ersten Bürstenträgerteils von dem zweiten Bürstenträgerteil und gleichzeitig die Bürsten freigegeben, die mittels Federdruck gegen die Lamellen des Kommutators angedrückt werden.

In einer weiteren vorteilhaften Ausgestaltung des Bürstenträgers weist das erste Bürstenträgerteil, auf der der Trägerplatte gegenüberliegenden Seite, Zentrierzapfen auf, die zur Fixierung/Zentrierung des Bürstenträgers im Motorgehäuse dienen. Dies hat den Vorteil, dass der Bürstenträger einfach während der Montage in einem Motorgehäuse des elektromotorischen Stellantriebs zentriert werden kann. Ferner kann so bei einer vorhandenen U-förmigen Aussparung in dem ersten und/oder dem zweiten Bürstenträgerteil eine Verformung der U-förmigen Aussparung während der Montage in dem elektromotorischen Stellantrieb verhindert werden.

In einer weiteren vorteilhaften Ausgestaltung des Bürstenträgers ist in dem ersten Bürstenträgerteil eine Aussparung zur Aufnahme eines Massenkontaktes vorgesehen, in die der Massekontakt eingebracht ist, wobei die Aussparung und der Massekontakt so ausgebildet sind, dass der Massekontakt einerseits fest verbindbar ist mit der als Leiterplatte ausgeführten Trägerplatte und andererseits in einem eingebauten Zustand des Bürstenträgers in dem elektromotorischen Stellantrieb ein Motorgehäuse kontaktiert, das auch als Polgehäuse bezeichnet wird. Eine zuverlässige Erdung des Polgehäuses kann so einfach gewährleistet werden und gleichzeitig ist eine kompakte Ausbildung des Bürstenträgers ermöglicht.

In Bezug auf den elektromotorischen Stellantrieb zeichnet sich die Erfindung aus durch ein Gehäuse, in dem ein Motor, eine Trägerplatte und ein Bürstenträger angeordnet sind, wobei die Trägerplatte als elektrische Leiterplatte ausgeführt ist und fest mit dem ersten Bürstenträgerteil verbunden ist und wobei mittels der im Bürstenträger aufgenommenen Bürsten ein Kommutator des Motors kontaktiert wird.

In einer vorteilhaften Ausgestaltung des elektromotorischen Stellantriebs umfasst das Gehäuse ein Motorgehäuse, in dem Ausnehmungen vorgesehen sind, durch die Montagenadeln von außen zugänglich sind, die das erste und zweite Bürstenträgerteil vor und während des Montagevorgangs starr miteinander koppeln und gleichzeitig die Bürsten in einer vorgegebenen Montageposition zurückhalten. Dies ermöglicht eine einfache und präzise Montage des Bürstenträgers in dem Motorgehäuse und ein nachträgliches entfernen der Montagenadeln zur Freigabe der Bürsten und der Schwingungsentkopplung.

Wenn der Bürstenträger mit Zentrierzapfen ausgestattet ist, die bei der Montage durch die Ausnehmungen im Motorgehäuse aufgenommen werden entsteht eine zentrierende Wirkung beim Fügevorgang zwischen Bürstenträger und Motorgehäuse. Auf diese Weise wird einfach verhindert, dass ein Bürstenträgerteil durch Ungenauigkeiten bei der Montage beschädigt wird und gleichzeitig wird eine axiale Fixierung des Bürstenträgers im Bezug auf das Motorgehäuse gewährleistet. Dadurch ist eine präzise Montage des Bürstenträgers in dem elektromotorischen Stellantrieb sichergestellt.

In einer weiteren vorteilhaften Ausgestaltung des elektromotorischen Stellantriebs ist die Trägerplatte über Dämpfungselemente mit dem Trägerplattengehäuse und/oder dem Trägerplattengehäusedeckel gekoppelt. Dies hat den Vorteil, dass bei geeigneter Ausbildung der Dämpfungselemente die Trägerplatte mit dem Bürstenträger, vorzugsweise im Bereich seiner Zentrierzapfen oder gegebenenfalls vorhandener Auflageflächen, fest in das Motorgehäuse eingespannt wird und gleichzeitig eine Schwingungsentkopplung der Trägerplatte zu dem Trägerplattengehäuse bzw. dem Trägerplattengehäusedeckel gewährleistet ist. Dies führt dann einerseits zu einem präzisen Sitz des Bürstenträgers in dem Motorgehäuse und andererseits zur Schwingungsdämpfung und einer weiteren Reduktion von Vibrationen oder Geräuschemissionen.

Ausführungsbeispiele der Erfindung werden im folgenden anhand der schematischen Zeichnungen erläutert. Es zeigen:
- Figur 1: eine Explosionsdarstellung des elektromotorischen Stellantriebs,
- Figur 2: eine Explosionsdarstellung des Bürstenträgers 5 und
- Figur 3: eine Explosionsdarstellung,des Bürstenträgers 5, einer Trägerplatte 4 und eines Trägerplattengehäusedeckels 5.

Elemente gleicher Konstruktion und Funktion sind figurenübergreifend mit den selben Bezugszeichen gekennzeichnet.

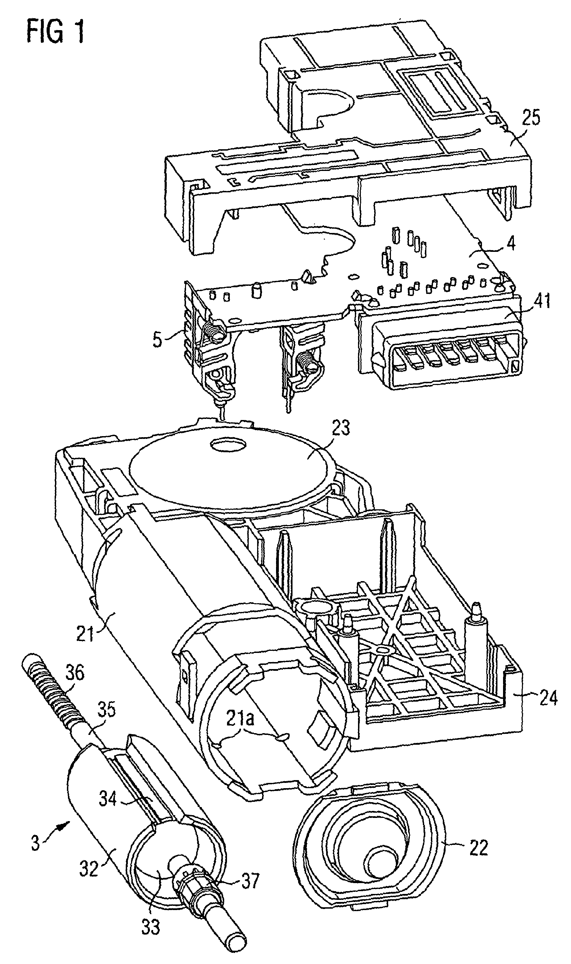

Ein elektromotorischer Stellantrieb (Figur 1) hat ein Motorgehäuse 21, einen Motorgehäusedeckel 22, ein Getriebegehäuse 23, ein Trägerplattengehäuse 24 und ein Trägerplattengehäusedeckel 25. Das Getriebegehäuse 23 nimmt ein Getriebe auf, das bevorzugt als Schneckengetriebe ausgebildet ist.

Das Getriebegehäuse 23, das Trägerplattengehäuse 24 und der Trägerplattengehäusedeckel 25 sind bevorzugt aus Kunststoff, insbesondere aus Thermoplast, hergestellt. Lediglich das Motorgehäuse 21 und gegebenenfalls der Motorgehäusedeckel 22 sind aus Metall hergestellt. Das Motorgehäuse kann beispielsweise als gerollte Metallplatine oder als gezogenes Polgehäuse ausgebildet sein.

Das Motorgehäuse 21 ist so ausgebildet, dass ein Motor 3 in axialer Richtung einführbar ist. Der Motor ist vorzugsweise ein permanent erregter Gleichstrommotor. Er weist ein Polgehäuse auf, in dem Permanentmagnete 32 angeordnet sind. Das Polgehäuse ist bevorzugt das Motorgehäuse 21. Ferner hat er einen Anker 33, der mit Spulen versehen ist und eine Ankerwelle 35 aufweist, die mit einer Spindel 36 gekoppelt ist oder einstückig mit dieser ausgebildet ist. Die Spindel 36 greift ein in ein Schneckenrad des Getriebes. Ferner ist auf der Ankerwelle 35 ein Kommutator 37 mit Kommutatorlamellen angeordnet, die mit jeweils diesen zugeordneten Spulen 34 elektrisch verbunden sind.

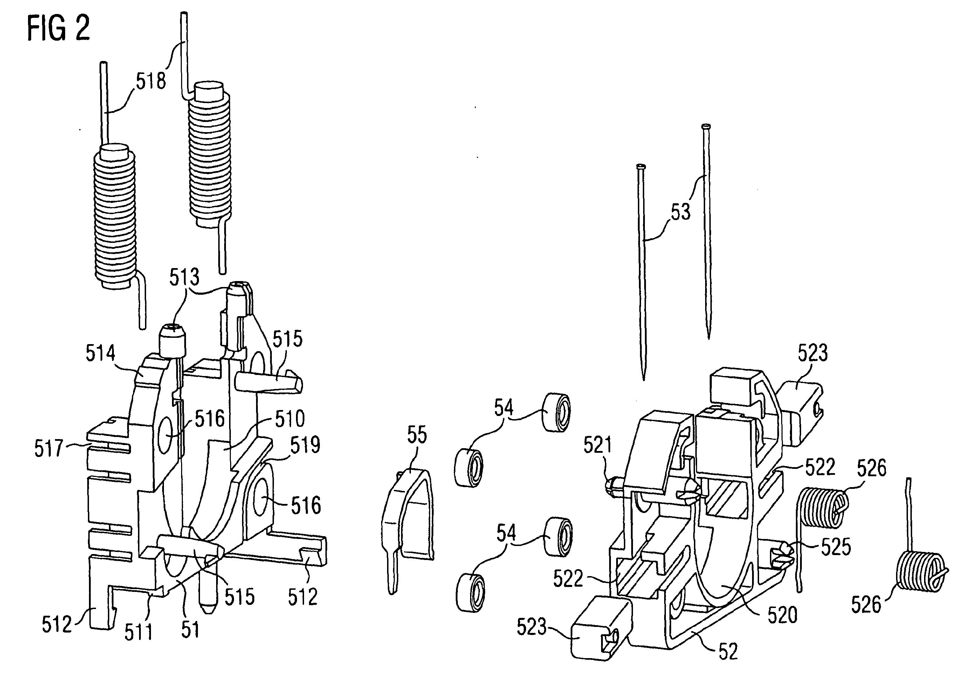

Ferner ist eine Trägerplatte 4 vorgesehen, die als elektrische Leiterplatte ausgeführt ist und mit einer Steckeraufnahme 41 gekoppelt ist. Gleichzeitig kann die Leiterplatte als Basis für eine elektronische Schaltung, zum Beispiel zur Steuerung des Stellantriebes dienen. Ferner ist auch ein Bürstenträger 5 mit der Trägerplatte 4 gekoppelt. Der Bürstenträger 5 hat ein erstes Bürstenträgerteil 51 (Figur 2), das eine U-förmige Aussparung 510 zur Aufnahme des Kommutators 37 aufweist. Ferner ist auf dem ersten Bürstenträgerteil 51 eine Auflagefläche 511 ausgebildet, an der das erste Bürstenträgerteil 51 auf der Trägerplatte 4 aufliegt, wenn Schnapphaken 512 mit der Trägerplatte 4 verrastet sind. Das erste Bürstenträgerteil 51 ist bevorzugt nach dem Verrasten der Schnapphaken 512 mit der Trägerplatte 4 mittels einer Löt- oder auch einer Schweißverbindung starr mit der Trägerplatte 4, bevorzugt im Bereich der Auflagefläche 511 verbunden und elektrisch kontaktiert.

Das erste Bürstenträgerteil 51 hat ferner Zentrierzapfen 513, die bei der Montage des Bürstenträgers 5 in Ausnehmungen 21a in dem Motorgehäuse 21 eingeführt werden. Dadurch wird einfach sichergestellt, dass die U-förmige Aussparung 510 des ersten Bürstenträgerteils 51 nicht zusammengedrückt wird bei der Montage und ferner der Bürstenträger 5 axial im Motorgehäuse 21 fixiert ist.

Ferner sind auf dem ersten Bürstenträgerteil 51 Auflageflächen 514 ausgebildet, mit denen das erste Bürstenträgerteil 51 auf der Wandung des Motorgehäuses 21 aufliegt. Die Auflageflächen 514 sind bevorzugt sehr präzise hergestellt und gewährleisten eine zusätzliche Zentrierung des Bürstenträgers 5 in dem Motorgehäuse 21. In einer einfacheren Ausführungsform des Bürstenträgers 5 können auch nur die Zentrierzapfen 513 oder nur die Auflageflächen 514 vorgesehen sein. Weiterhin sind in dem ersten Bürstenträgerteil 51 Fixierstifte 515 und Aufnahmen 516 ausgebildet für Dämpfungselemente 54 und zugeordnete Fixierstifte 521 eines zweiten Bürstenträgerteils 52.

Ferner hat das erste Bürstenträgerteil 51 Aufnahmen 517 für elektrische Drosseln 518. Die Drosseln 518 sind im montierten Zustand des Bürstenträgers 5 elektrisch leitend mit einem entsprechenden Anschluss auf der Trägerplatte 4 verbunden. Dazu sind die Drosseln 518 bevorzugt im Bereich ihres in Bezug auf die Zeichenebene unteren Endes mit der Trägerplatte verlötet.

Ferner ist in dem ersten Bürstenträgerteil 51 eine Aussparung 519 für einen Massekontakt 55 vorgesehen. Der Massekontakt 55 ist in die Aussparung 519 eingebracht. Die Aussparung 519 und der Massekontakt 55 sind so ausgebildet, dass der Massekontakt einerseits elektrisch leitend mit der Trägerplatte 4, insbesondere mit einer darauf angeordneten Leiterbahn, verbindbar ist. Wenn der Bürstenträger 5 in dem elektromotorischen Stellantrieb montiert ist, so ist das eine freie Ende des Massekontakts 55 elektrisch mit einer Leiterbahn der Trägerplatte 4, vorzugsweise mittels einer Lötverbindung kontaktiert. Der Massekontakt ist in einem Teilbereich so in der Art einer Blattfeder ausgebildet, dass er das Motorgehäuse 21 kontaktiert, wenn der Bürstenträger 5 in dem Stellantrieb montiert ist. Dadurch ist auf einfache Weise eine sichere Erdung des Motorgehäuses 21 gewährleistet.

Das zweite Bürstenträgerteil 52 hat ebenfalls eine U-förmige Aussparung 520 zur Aufnahme der Ankerwelle 35 mit dem Kommutator 37. Ferner sind in dem zweiten Bürstenträgerteil 52 Fixierstifte 521 ausgebildet. Ferner sind Aufnahmen für die Dämpfungselemente 54 und die Fixierstifte 515 des ersten Bürstenträgerteils 51 in dem zweiten Bürstenträgerteil 52 ausgebildet. Ferner sind in dem ersten und zweiten Bürstenträgerteil 51, 52 Führungen für die Montagenadeln 53 ausgebildet.

Ferner sind in dem zweiten Bürstenträgerteil zwei Bürstenkammern 522 vorgesehen, die jeweils eine Bürste 523 aufnehmen, die im fertig montierten Zustand des Bürstenträgers 5 in dem Stellantrieb von jeweils einer Feder 526 gegen die Kommutatorlamellen des Kommutators 37 gedrückt werden. Die Bürsten 523 sind bevorzugt mittels einer flexiblen Litze mit dem der Trägerplatte 4 abgewandten Ende der Drossel 518 elektrisch leitend verbunden.

Auf dem zweiten Bürstenträgerteil 52 sind jeweils Federhalter 525 für die Federn 526 ausgebildet. Jeder Federhalter 525 hat eine Nut zur Aufnahme eines freien Endes der Feder 526. Die Feder ist auf den Federhalter 525 mit dem einen freien Ende in der Nut des Federhalters 525 aufgesteckt und anschließend durch entsprechendes Rotieren des weiteren freien Endes vorgespannt. Das weitere freie Ende drückt dann gegen die Bürste 523 und ist in der Federnut 524 der Bürstenkammer 522 geführt.

Bei der Montage des Bürstenträgers 5 werden die Dämpfungselemente 54 auf die jeweiligen Fixierstifte 515 und 521 des ersten und zweiten Bürstenträgerteils 51, 52 gesteckt. Die Dämpfungselemente 54 sind bevorzugt ringförmig ausgebildet und bestehen beispielsweise aus einem Elastomer. Die Dämpfungselemente 54 können aber auch aus anderen Materialien mit entsprechender Elastizität und Dämpfungseigenschaften hergestellt sein, wie zum Beispiel NBR, Si-Elastomere oder Polyuretane.

Anschließend werden das erste und zweite Bürstenträgerteil 51, 52 miteinander verbunden, indem die Fixierstifte 515 des ersten Bürstenträgerteils 51 in die Aufnahmen in dem zweiten Bürstenträgerteil 52 eingeführt werden und die Fixierstifte 521 des zweiten Bürstenträgerteils 52 in die Aufnahmen 516 des ersten Bürstenträgerteils 51 eingeführt werden. Die Fixierstifte 521 sind bevorzugt mit Rastnasen versehen, welche in den Aufnahmen 516 einrasten. Die Rastnasen sind auf den Fixierstiften 515 so angeordnet, dass auf die Dämpfungselemente 54 im eingerasteten Zustand der Rastnasen durch das erste Bürstenträgerteil und das zweite Bürstenträgerteil 51, 52 eine vorgegebene axiale Vorspannkraft ausgeübt wird und gleichzeitig das erste Bürstenträgerteil 51 von dem zweiten Bürstenträgerteil 52 schwingungsentkoppelt ist. Unter Schwingungsentkopplung ist in diesem Zusammenhang zu verstehen, dass Schwingungen, die durch das Schleifen der Bürsten 523 über die Kommutatorlamellen des Kommutaors 37 bedingt sind, stark gedämpft werden. Die Amplitude dieser Schwingungen wird beispielsweise um mindestens 30 % gedämpft.

Die Frequenz der Schwingungen, die durch den Übergang der Bürsten 523 von einer Kommutatorlamelle zur nächsten Kommutatorlamelle erzeugt werden, sind abhängig von der Drehzahl des Motors 3 und von der Anzahl der Kommutatorlamellen. Wenn der Motor 3 eine Drehzahl von 5000 Umdrehungen pro Minute hat und abhängig von der Last mit 3000 bis 5000 Umdrehungen pro Minute betrieben wird und einen Kommutator 37 mit 10 Kommutatorlamellen hat, so beträgt die Frequenz der Schwingungen zwischen 500 und 1000 Hz.

In einem nächsten Montageschritt werden die ersten und zweiten Bürstenträgerteile 51, 52 so weiter gegeneinander gedrückt, dass die Führungen für die Montagenadeln 53 des ersten und zweiten Bürstenträgerteils 52 miteinander fluchten. Anschließend werden die Montagenadeln 53 in die Führungen des ersten und zweiten Bürstenträgerteils 51, 52 eingebracht. Die Führungen sind so ausgebildet, dass im eingebrachten Zustand der Montagenadeln 53 das erste und zweite Bürstenträgerteil 51, 52 starr miteinander gekoppelt sind und gleichzeitig die Bürsten 523 in einer vorgegebenen Montageposition zurückgehalten werden. In der in den Figuren dargestellten Ausführung verlaufen die Führungen für die Montagenadeln 53 zentrisch innerhalb und in axialer Richtung der Zentrierzapfen 513 des ersten Bürstenträgerteils 51. Die Montageposition der Bürsten 523 ist vorteilhaft so gegeben, dass die Bürsten 523 einen vorgegebenen Abstand zu den Kommutatorlamellen haben, wenn der Bürstenträger 5 in das Motorgehäuse 21 eingebracht ist. Dadurch kann einfach sichergestellt werden, dass der Bürstenträgers 5 einfach radial zu der Ankerwelle 35 in das Motorgehäuse 21 eingebracht werden kann, wenn sich der Motor 3 bereits in dem Motorgehäuse 21 befindet. Darüber hinaus wird so sichergestellt, dass während eines Transportes des Bürstenträgers 5 oder auch während des Einbringens des Bürstenträgers 5 in das Motorgehäuse 21 die einzelnen Elemente des Bürstenträgers 5 in einer festen Position zueinander bleiben.

Die Montagenadeln 53 sind vorzugsweise so lang ausgebildet und so in den Führungen angeordnet, dass sie um ein vorgegebenes Maß aus den Zentrierzapfen 513 herausstehen. Bei dem Einführen des Bürstenträgers 5 in das Motorgehäuse 21 erfolgt dann durch die Montagenadeln 53 eine grobe Zentrierung des Bürstenträgers 5, sobald diese in die Ausnehmungen 21a des Motorgehäuses 21 eingreifen. Im weiteren Verlauf des Einführens der Bürstenträger 5 in das Motorgehäuse 21 greifen dann die Zentrierzapfen 513 ein in die Ausnehmungen 21a des Motorgehäuses 21. Dadurch wird zum einen verhindert, dass die U-förmige Aussparung 510 des ersten Bürstenträgerteils 51, durch Andruck an die Motorgehäusewand zusammengedrückt werden und ferner wird der Bürstenträger 5 axial bezogen auf die Ankerwelle 35 des Motors fixiert in dem Motorgehäuse 21.

In der endgültigen Montageposition des vollständig eingeführten Bürstenträgers 5 im Motorgehäuse 21, liegt der Bürstenträger an Auflageflächen 514, die in dem ersten Bürstenträgerteil 51 ausgebildet sind, an der Wandung des Motorgehäuses 21 an und zentrieren den Bürstenträger 5 im Motorgehäuse 21. In einer einfacheren Ausführungsform des Bürstenträgers 5 können auch nur alternativ die Zentrierzapfen 513 oder die Auflageflächen 514 vorgesehen sein. Die Auflageflächen sind mit einer sehr geringen Fertigungstoleranz hergestellt.

Wenn der Bürstenträger 5 in seine vorgegebene Montageposition in das Motorgehäuse 21 eingebracht ist, werden die Montagenadeln 53 entfernt. Dadurch dass die Führungen für die Montagenadeln 53 in der Achse der Zentrierzapfen 513 verlaufen und die Montagenadeln 53 über die Zentrierzapfen 513 herausragen, können die Montagenadeln 53 im dargestellten Beispiel durch die Ausnehmungen 21a des Motorgehäuses 21 aus dem Bürstenträger 5 herausgezogen werden.

Sobald die Montagenadeln 53 aus dem Bürstenträger 5 herausgezogen sind, ist das erste von dem zweiten Bürstenträgerteil 51, 52 schwingungsentkoppelt und die Federn 526 können die Bürsten 523 gegen die Kommutatorlamellen drücken. Dies wird dadurch ermöglicht, dass zwischen dem ersten und dem zweiten Bürstenträgerteil die Dämpfungselemente angeordnet sind und sich die beiden Bürstenträgerteile außer im Bereich der Verrastungen der Fixierstifte 515, 521 nicht berühren. Dazu ist es erforderlich, dass die Rastnasen auf den Fixierstiften 515, 521 so beabstandet sind, dass nach einem Einrasten der Rastnasen in den dem jeweiligen Fixierstift 515, 521 zugeordneten Aufnahmen 516 noch ein axiales Spiel zwischen den ersten und zweiten Bürstenträgerteilen 51, 52 besteht und die Fixierstifte so ausgebildet sind, dass in den zugeordneten Aufnahmen 516 noch ein radiales Spiel besteht. Auf diese Art und Weise sind das erste und zweite Bürstenträgerteil 51, 52 bei entsprechender Ausbildung der Fixierstifte 515 und 521 und der Aufnahmen 516, sowohl axial als auch in radialer Richtung hauptsächlich über die Dämpfungselemente miteinander verbunden und somit schwingungsentkoppelt. So kann einfach sichergestellt werden, dass Vibrationen des zweiten Bürstenträgerteils 52 nur sehr stark gedämpft auf das erste Bürstenträgerteil 51 übertragen werden.

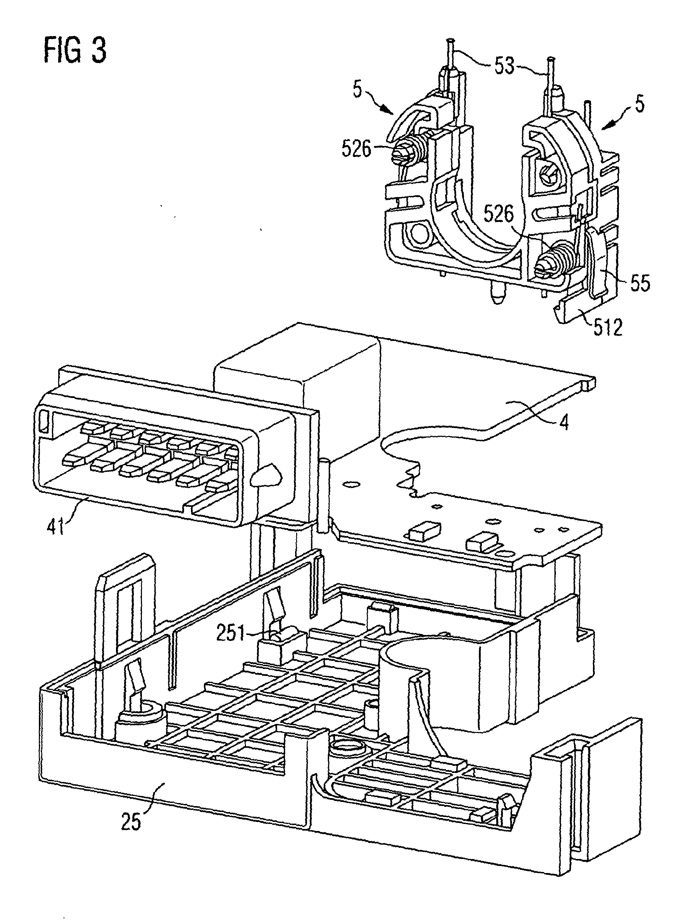

Vorzugsweise ist die Trägerplatte 4(Figur 3) mittels weiterer Dämpfungselemente 251, die vorzugsweise in dem Trägerplattengehäusedeckel 25 angeordnet sind, von dem Motorgehäusedeckel 25 schwingungsentkoppelt. Durch die beim Anpressen der weiteren Dämpfungsmittel 251 auf die Trägerplatte 4 übertragene Kraft wird vorteilhafterweise der Bürstenträger 5 auf seine Auflageflächen 514 bzw. die Zentrierzapfen 513 vorgespannt. Die weiteren Dämpfungselemente 251 können jedoch auch auf der Trägerplatte 4 angeordnet sein und entsprechend mit dem Trägerplattengehäusedeckel 25 zusammenwirken oder auch mit dem Trägerplattengehäuse 24 zusammenwirken oder auf diesem angeordnet sein.

Statt der in Figur 2 dargestellten 4 ringförmigen Dämpfungselemente 54 können auch weniger oder mehr ringförmige Dämpfungselemente vorgesehen sein. Die Dämpfungselemente können darüber hinaus auch eine andere Form aufweisen, die geeignet ist, das erste Bürstenträgerteil 51 von dem zweiten Bürstenträgerteil 52 schwingungszuentkoppeln. So könnte als Dämpfungselement auch ein im wesentlichen flächig ausgebildetes Kunststoffteil vorgesehen sein oder auch mehrere entsprechend ausgebildete Kunststoffteile.

## Patentansprüche

1. Bürstenträger für einen ein Motorgehäuse (21) aufweisenden elektromotorischen Stellantrieb mit einem ersten Bürstenträgerteil (51), das von einer Trägerplatte (4) getragen wird und dazu mit dieser starr verbunden ist,
und einem zweiten Bürstenträgerteil (52), das Bürsten (523) aufnimmt, mittels derer Kommutatorlamellen (37) eines auf einer Ankerwelle (35) des elektromotorischen Antriebs befestigten Kommutators (37) kontaktierbar sind,
wobei das zweite Bürstenträgerteil (52) von dem ersten Bürstenträgerteil (51) getragen wird und mittels mindestens eines Dämpfungselements (54) Schwingungsentkoppelt ist von dem ersten Bürstenträgerteil (51),
wobei zumindest das zweite Bürstenträgerteil (52) eine U-förmige Aussparung (520) hat zur Aufnahme des Kommutators (37) durch radiale Aufsteckmontage des Bürstenträgers.

2. Bürstenträger nach Anspruch 1,
**dadurch gekennzeichnet, dass**
das mindestens eine Dämpfungselement (54) ringförmig ausgebildet ist und das erste und/oder zweite Bürstenträgerteil (51, 52) mindestens ein Aufnahmemittel, vorzugsweise einen Fixierstift (515, 521) aufweist, das das Dämpfungselement (54) aufnimmt.

3. Bürstenträger nach einem der vorstehenden Ansprüche,
**dadurch gekennzeichnet, dass**
in dem ersten und zweiten Bürstenträgerteil (51, 52) Führungen für Montagenadeln vorgesehen sind, die so ausgebildet sind, dass darin eingeführte Montagenadeln (53) im eingeführten Zustand das erste und zweite Bürstenträgerteil (51, 52) zumindest bezüglich eines Freiheitsgrades starr miteinander koppeln und gleichzeitig die aufgenommenen Bürsten (523) in einer vorgegebenen Montageposition zurückhalten.

4. Bürstenträger nach einem der vorstehenden Ansprüche,
**dadurch gekennzeichnet, dass** das erste Bürstenträgerteil (51) Zentrierzapfen (513) aufweist, die derart ausgebildet sind, dass sie im montierten Zustand des Bürstenträgers und der Trägerplatte (4) in einem Motorgehäuse (21) eines Stellantriebes in Ausnehmungen (21a) des Motorgehäuses, und/oder der Trägerplatte (4), hinein oder durch diese hindurch ragen.

5. Bürstenträger nach Anspruch 3 und 4,
**dadurch gekennzeichnet, dass** zumindest ein Teil der Führungen in dem ersten Bürstenträgerteil (51) innerhalb und in axialer Richtung der Zentrierzapfen (513) verlaufen.

6. Bürstenträger nach einem der vorstehenden Ansprüche,
**dadurch gekennzeichnet, dass**
in dem ersten Bürstenträgerteil (51) eine Aussparung (519) zur Aufnahme eines Massekontakts (55) vorgesehen ist, in die der Massekontakt (55) eingebracht ist, wobei die Aussparung (519) und der Massekontakt (55) so ausgebildet sind, dass der Massekontakt (519) einerseits elektrisch leitend verbindbar ist mit einer Leiterbahn der Trägerplatte (4) und andererseits im eingebauten Zustand des Bürstenträgers (5) in einem Motorgehäuse (21) eines Stellantriebs (3) das Motorgehäuse (21) elektrisch kontaktiert.

7. Elektromotorischer Stellantrieb mit einem Gehäuse, in dem ein Motor (3), eine Trägerplatte (4) und ein Bürstenträger (5) gemäß einem der vorstehenden Ansprüche angeordnet sind, wobei die Trägerplatte (4) fest mit dem ersten Bürstenträgerteil (51) verbunden ist und mittels der Bürsten (523) ein Kommutator (37) des Motors (3) kontaktiert ist.

8. Elektromotorischer Stellantrieb nach Anspruch 7 in Verbindung mit Anspruch 3,
**dadurch gekennzeichnet, dass**
das Gehäuse ein Motorgehäuse (21) umfasst, in dem Ausnehmungen (21a) vorgesehen sind, die derart ausgebildet sind, dass in die Führungen eingebrachte Montagenadeln (53) im montierten Zustand des Stellantriebes durch die Ausnehmungen (21a) aus dem Bürstenträger (5) entfernt werden können.

9. Elektromotorischer Stellantrieb nach einem der Ansprüche 7 bis 8,
**dadurch gekennzeichnet, dass**
die Trägerplatte (4) über Dämpfungselemente (251) mit einem Trägerplattengehäuse (24) und/oder einem Trägerplattengehäusedeckel (25) gekoppelt ist.

## Claims

1. Brush holder for an electric-motor driven actuator having a motor housing (21), with a first brush holder component (51), which is supported by a carrier plate (4) and is connected rigidly to this,
and a second brush holder component (52), holding brushes (523), by means of whose commutator segments (37) contact can be made with a commutator (37) fixed on an armature shaft (35) of the electric-motor drive,
whereby the second brush holder component (52) is supported by the first brush holder component (51), and is decoupled in a vibration-neutralizing manner from the first brush holder (51) by means of at least one damping element (54),
with at least the second brush holder component (52) having a U-shaped recess (520) to accommodate the commutator (37) by radial slip-fit assembly of the brush holder.

2. Brush holder according to claim 1,
**characterised in that**
the at least one damping element (54) is configured as annular and the first and/or second brush holder component (51, 52) has at least one holding means, preferably a location pin (515, 521), which holds the damping element (54).

3. Brush holder according to one of the preceding claims,
**characterised in that**
guides for assembly pins are provided in the first and second brush holder components (51, 52), which are configured such that assembly pins (53) inserted therein, when the first and second brush holder components (51, 52) are inserted, are coupled rigidly to each other at least in relation to a degree of freedom and at the same time retain the accommodated brushes (523) in a predefined assembly position.

4. Brush holder according to one of the preceding claims,
**characterised in that**
the first brush holder component (51) has spigots (513), which are configured such that when the brush holder and the carrier plate (4) is assembled in a motor housing (21) of an actuator, they project into cutouts (21a) in the motor housing and/or the carrier plate (4) or through these.

5. Brush holder according to claim 3 and 4,
**characterised in that** at least some of the guides in the first brush holder component (51) run within and in an axial direction in respect of the spigots (513).

6. Brush holder according to one of the preceding claims,
**characterised in that**
a recess (519) is provided in the first brush holder component (51) to accommodate an earth contact (55), with the earth contact (55) inserted therein, whereby the recess (519) and the earth contact (55) are configured such that the earth contact (519) can on the one hand be connected in an electrically conductive manner to a printed conductor on the carrier plate (4) and on the other hand, when the brush holder (5) is incorporated in an motor housing (21) of an actuator (3), makes electrical contact with the motor housing (21).

7. Electric-motor driven actuator with a housing, in which a motor (3), a carrier plate (4) and a brush holder (5) according to one of the preceding claims are arranged, whereby the carrier plate (4) is connected in a fixed manner to the first brush holder component (51) and makes contact via the brushes (523) with a commutator (37) of the motor (3).

8. Electric-motor driven actuator according to claim 7 in conjunction with claim 3,
**characterized in that**
the housing comprises a motor housing (21), in which cutouts (21a) are provided, which are configured such that assembly pins inserted into the guides can be removed from the brush holder (5) when the actuator is assembled through the cutouts (21a) .

9. Electric-motor driven actuator according to one of claims 7 to 8, **characterized in that**
the carrier plate (4) is coupled via damping elements (251) to a carrier plate housing (24) and/or a carrier plate housing cover (25).

## Revendications

1. Porte-balais pour une servocommande à moteur électrique présentant un boîtier de moteur (21),
comprenant une première partie (51) de porte-balais, qui est portée par une plaque porteuse (4) et est à cet effet assemblée rigidement à cette dernière,
et une deuxième partie (52) du porte-balais, qui reçoit des balais (523) au moyen desquels des lamelles (37) d'un collecteur (37) fixé sur un arbre d'induit (35) de la commande à moteur électrique peuvent être mises en contact, dans lequel la deuxième partie (52) du porte-balais est portée par la première partie (51) du porte-balais, et est découplée en vibrations de la première partie (51) du porte-balais au moyen d'au moins un élément amortisseur (54), dans lequel au moins la deuxième partie (52) du porte-balais présente un évidement (520) en forme de U destiné à recevoir le collecteur (37) par un montage d'emboîtement radial du porte-balais.

2. Porte-balais selon la revendication 1,
**caractérisé en ce que**
l'au moins un élément amortisseur (54) est de configuration annulaire et la première et/ou la deuxième partie (51, 52) du porte-balais présentent au moins un moyen de réception, de préférence un goujon de positionnement (515, 521) qui reçoit l'élément amortisseur (54).

3. Porte-balais selon une des revendications précédentes,
**caractérisé en ce que**
dans les première et deuxième parties (51, 52) du porte-balais, des guides sont prévus pour des épingles de montage, lesquels guides sont conformés de manière que des épingles de montage (53) insérées dans ces guides pour la protection lors du transport et pour la simplification du montage, accouplent rigidement les première et deuxième parties (51, 52) du porte-balais l'une à l'autre, du moins relativement à un degré de liberté et qu'en même temps, les balais (523) qui y sont logés soient retenus dans une position de montage prédéterminée lorsque ces épingles de montage sont insérées.

4. Porte-balais selon une des revendications précédentes,
**caractérisé en ce que** la première partie (51) du porte-balais présente des tourillons de centrage (513) qui sont configurés de manière qu'à l'état monté du porte-balais et de la plaque porteuse (4) dans un boîtier de moteur (21) d'une servocommande, ils soient engagés dans des évidements (21a) du boîtier de moteur et/ou de la plaque porteuse (4) et traversent cette plaque.

5. Porte-balais selon les revendications 3 et 4,
**caractérisé en ce qu'**au moins une partie des guides s'étend dans la première partie (51) du porte-balais à l'intérieur des tourillons de centrage (513) et dans la direction axiale de ces derniers.

6. Porte-balais selon une des revendications précédentes,
**caractérisé en ce que**, dans la première partie (51) du porte-balais, est prévu un évidement (519) destiné à recevoir un contact de masse (55) et dans lequel le contact de masse (55) est inséré, l'évidement (519) et le contact de masse (55) étant conformés de manière que le contact de masse (519) puisse, d'une part être connecté électriquement à une piste conductrice de la plaque porteuse (4) et que, d'autre part, dans l'état monté du porte-balais (5) dans un boîtier de moteur (21) d'une servocommande (3), le boîtier du moteur (21) soit mis en contact électrique.

7. Servocommande à moteur électrique comprenant un boîtier dans lequel sont disposés un moteur (3), une plaque porteuse (4) et un porte-balais (5) selon une des revendications précédentes, la plaque porteuse (4) étant reliée rigidement à la première partie (51) du porte-balais et un collecteur (37) du moteur (3) étant mis en contact au moyen des balais (523).

8. Servocommande à moteur électrique selon la revendication 7, en combinaison avec la revendication 3,
**caractérisée en ce que**
le boîtier comprend un boîtier de moteur (21) dans lequel sont prévus des évidements (21a) qui sont conformés de manière que des épingles de montage (53) insérées dans des guides puissent être retirées du porte-balais (5) à travers les évidements (21a) dans l'état monté de la servocommande.

9. Servocommande à moteur électrique selon une des revendications 7 à 8,
**caractérisé en ce que** la plaque porteuse (4) est accouplée à un boîtier de plaque porteuse (24) et/ou à un couvercle de boîtier de plaque porteuse (25) par l'intermédiaire d'éléments amortisseurs (251).
